(19) Europäisches Patentamt

European Patent Office

Office européen des brevets

(11) EP 0 454 274 B1

(12) EUROPEAN PATENT SPECIFICATION

(45) Date of publication and mention
of the grant of the patent:
**03.07.1996 Bulletin 1996/27**

(51) Int Cl.⁶: **H04N 1/40**

(21) Application number: **91201308.3**

(22) Date of filing: **24.04.1991**

(54) **Method for controlling halftone dot shape during dot growth**

Verfahren zur Steuerung der Rasterpunktform während des Punktwachsens

Procédé pour la commande de la forme des points de trame pendant la croissance des points

(84) Designated Contracting States:
**BE DE FR GB**

(30) Priority: **25.04.1990 US 514138**

(43) Date of publication of application:
**30.10.1991 Bulletin 1991/44**

(73) Proprietor: **Bayer Corporation
Pittsburgh, PA 15219-2502 (US)**

(72) Inventor: **Delabastita, Paul A.
Boston MA 02116 (US)**

(74) Representative: **Ramon, Charles Lucien et al
Agfa-Gevaert N.V.
Dienst Intellectuele Eigendom 3800
Septestraat 27
2640 Mortsel (BE)**

(56) References cited:
**EP-A- 0 405 052         US-A- 4 918 622
US-A- 4 984 097**

## Description

### BACKGROUND OF THE INVENTION

The present invention relates to half-tone screening processes in general and, more particularly, to method for controlling half-tone dot shape during dot growth.

The present invention is related to the inventions described in EP-A-0 454 277 and EP-A-0 454 276 for "Method for Breaking-Up Symmetry of Matrix Elements in an Electronic Half-Tone Screening Process" and "Method for Multiplying Screening Frequency in an Electronic Half-Tone Screening Process" filed simultaneously herewith.

Most electronic halftoning techniques are based on the comparison of screen function values, defined at the resolution of the output recorder, with pixel values defined at that same resolution. The result of these comparisons determines for every addressable position if the medium is to be exposed or not by the recording device.

The distinction between different halftoning algorithms lies primarily in the way the screen function values are obtained, and how the resolution conversion of the pixels from scanner to recorder resolution is performed. In addition to that, special techniques and refinements have been described that improve the rendition of high frequency image components in the halftoning process, and that control the serration of the halftone dot boundaries. See "A Survey of Electronic Techniques for Pictorial Reproduction," IEEE Transactions on Communications, Vol. COM-29, No. 12, Dec. 1981, pp. 1,898-1,925.

### Pixel resolution conversion

The pixel resolution conversion from scanner to recorder resolution is essentially a resampling process, and the different techniques that have been described (Oth order interpolation or replication, 1st order or linear interpolation, higher order interpolation processes ...) can usually be classified as one of the known sampling conversion techniques. See U.S. Patent No. 4,533,942 and DE Patent No. 2,511,922.

### Calculation of screen function values

Two general classes of methods exist to obtain the screen function values for an electronic halftoning process.

### Use of a precalculated matrix or cell

In the first class of methods, screen functions are used that have an internal two dimensional periodicity when generated at the resolution of the output device. It is possible in that case to precalculate and store in a matrix or "cell" only one two dimensional period of the screen function and to reconstruct the whole function by repeating the period horizontally and vertically, like tiles on a floor. The two dimensional period contains typically more than one halftone dot. There are certain geometric relations between the size of a cell and the angle and ruling of the screen function it contains which restrict this method to the generation of rational screens. However, screening systems have been described for combinations of such rational screens that do work for high quality color reproduction, and that do not cause low frequency moire patterns. See U.S. Patent No. US-A-4 084 183. The advantage of this method is that the calculation of the two dimensional screen function period can be highly optimized, since it is done off line. A disadvantage is that only rational angles can be generated and that not every angle and ruling is available on the fly.

### On the fly calculation of screen function values

The second class of algorithms obtains screen function values by resampling a screen function period that was precalculated at 0 degrees under different angles and at different frequencies.

In a first subclass of this method, the angle and frequency of the resampling are limited to values that "lock" to the resolution grid of the precalculated screen period. With this method only screens with rational angles and only certain frequencies can be generated.

If more sophisticated resampling techniques are used, like e.g. weighted averaging and the addition of noise, the resampling of the precalculated screen period can be done at virtually any ruling and angle, including irrational angles.

Both the matrix and "on-the-fly" methods described above, require the availability of a screen function period. The calculation of the screen function period usually involves the evaluation of a screen function at all of the X-Y positions of a two dimensional matrix. Conventionally the domain of the matrix is scaled from -1.0 to +1.0 in both the x and y directions with the origin in the middle.

After the screen function has been evaluated for all the elements of the matrix, the function values are ordered, and it is this order which then controls how the micro dots will build up the dot as the dot grows.

It is desirable to have the dots grow in a controlled manner with smooth boundaries and a sharp, minimum fill contact with surrounding dots.

It is accordingly a general object of the invention to provide an improved method for controlling the growth of half-tone dots in an electronic screening process.

It is a specific object of the invention to provide a method for controlling dot growth in which the dot shape gradually changes during growth from 0% to 100%.

It is another object of the invention to provide a method that controls the gradual changing of dot shape during dot growth for both the standard quadratic and elliptical screens.

It is a further object of the invention to provide a method for changing the shape of the half-tone dot during dot growth from circular at the origin to square at 50% and back to circular at 100%.

## SUMMARY OF THE INVENTION

The above objects of the invention are realised, according to one aspect, by a method for controlling half-tone dot shape during dot growth in an electronic half-tone screening process, said method comprising the steps of:

A. determining the X and Y coordinate values, x and y, for a screen cell;

B. rotating a 50% square dot shape in the screen cell into alignment with the X and Y axes of the screen cells;

C. converting the X and Y coordinate values into a non-linear polar coordinate system where:

$$radius = (1.0 - cos(pi*x)*cos(pi*y))/2.0$$

D. utilizing as screen function, the value "s" where s = radius.

According to another aspect of the invention the x and y coordinate values for a screen cell are determined.

The shape of the 50% square dot is rotated into alignment with the x and y vectors of the screen cell. The Cartesian x and y coordinate values are converted into a non-linear polar coordinate system to vary the dot shape as the dot grows from 0% to 100%. Further processing using reverse rotation and conversion back to the Cartesian coordinate system provides elliptically shaped dots.

## BRIEF DESCRIPTION OF THE DRAWINGS

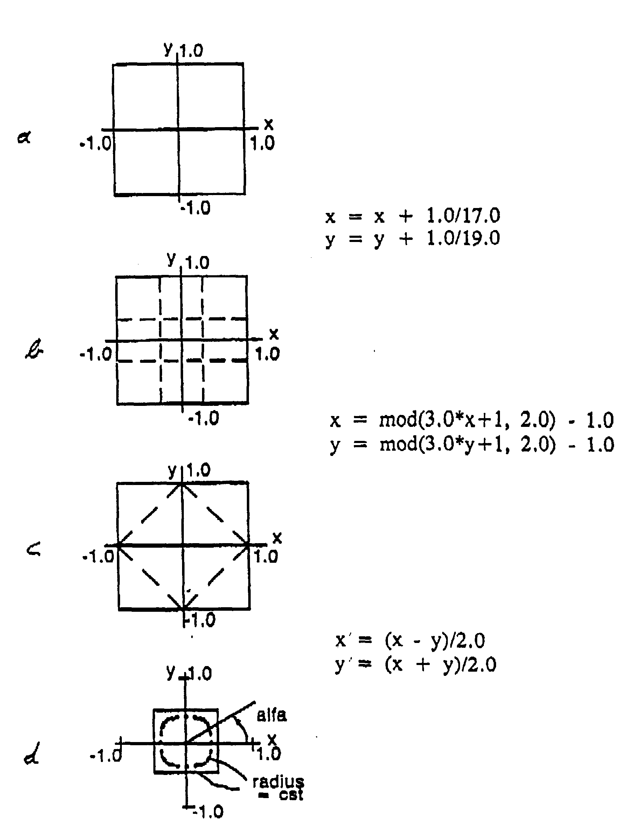

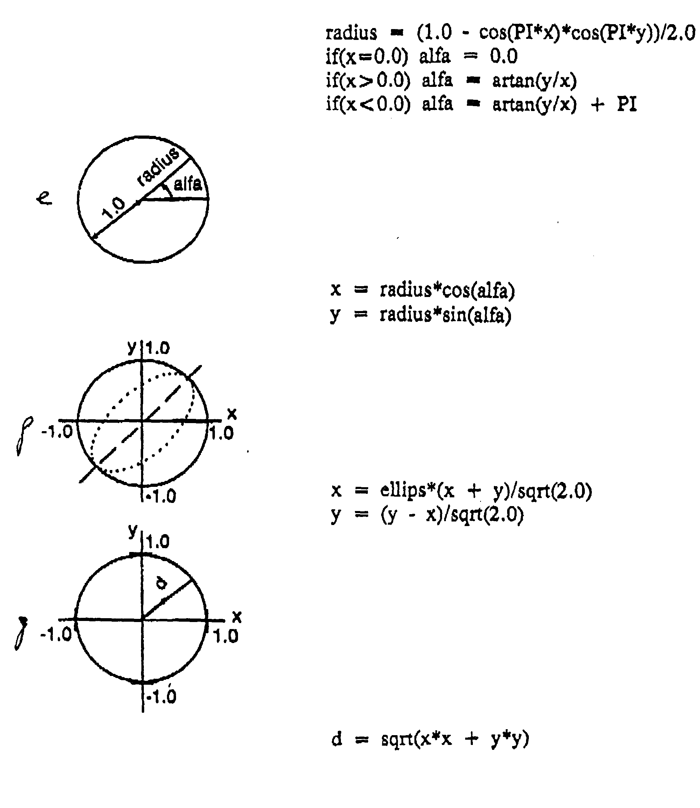

The objects and features of the invention will best be understood from a detailed description of a preferred embodiment thereof selected for purposes of illustration and shown in the accompanying single Figure that is divided into Sections A-G in which:

Section A depicts a screen cell with an associated formula for adding irrational numbers to the X and Y coordinates, X and Y respectively;

Section B depicts the multiplication of screen frequency in accordance with the associated formula for a modulo operation;

Section C depicts the rotation of the 50% square dot in accordance with the associated formula to produce the square box shown in Section D;

Section D depicts the rotated rhombus of Section C as a square box, the Cartesian coordinates of which are converted into a non-linear polar coordinate system through the associated formula to produce the circular figure shown in Section E;

Section E depicts the coordinate system converted square box of Section D in non-linear polar form;

Section F depicts the Section E figure converted to Cartesian coordinates through the formula associated with Section E; and,

Section G depicts the figure of Section F rotated in the opposite direction and by the same angular amount as the rotation depicted between Sections C and D through the formula associated with Section F and illustrates the screen function value "s" in the associated formula.

## DETAILED DESCRIPTION OF THE INVENTION

The present invention will be described in the broader context of generating a screen function that has the capability to break up matrix element symmetry, generate multiple dots in one matrix and produces excellent dot shapes, both quadratic and elliptical. Reference is made to the copending applications cited above.

The screen function described below is defined for an angle of 0 degrees. Other screen angles can be obtained from this basic definition.

The different steps to calculate the screen function value "s" from the X-Y coordinates in the matrix are summarized in the following table, and will be explained in further detail.

$$x = x + x0$$

$$y = y + y0$$

$$x = mod (m*x + 1.0,2.0) - 1.0$$

$$y = mod (m*y + 1.0,2.0) - 1.0$$

$$x = (x - y)/2.0$$

$$y = (x + y)/2.0$$

$$radius = (1.0 - cos(pi*x)*cos(pi*y)/2.0$$

$$if(x > 0.0) \ angle = artan(y/x)$$

$$if(x < 0.0) angle = artan(y/x) + pi$$

$$x = radius*cos(alfa)$$

$$y = radius*sin(alfa)$$

$$x = ellips*(x + y)/sqrt(2.0)$$

$$y = (-x + y)/sqrt(2.0)$$

$$s = sqrt(x*x + y*y)$$

**First step: the addition of an irrational number to the x and y coordinates**

$$x = x + x0$$

$$y = y + y0$$

By adding irrational numbers such as, two different, constant irrational numbers to each X and Y coordinate element, symmetry can be broken up. The matrix elements that have a symmetric position in the matrix and would otherwise receive the same screen function values, will now receive different values. This technique resolves the problem of ordering matrix elements which would otherwise have the same screen function values. It also provides a way of dithering if cells with multiple dots are used, as described below.

**Second step: multiplication of the screen frequency**

$$x = mod(m*x + 1.0, 2.0) - 1.0$$

$$y = mod(m*y + 1.0, 2.0) - 1.0$$

The frequency of the screen function is multiplied by an integer factor using the modulo operation. The modulo operation maps the domain range of -1.0 to +1.0 into a sequence of m times -1.0 to +1.0. The result is a multiplication of the frequency of the screen function by m, and an increase of the number of dots in the screen function period from 1 to m*m. Each of the dotted boxes in Section B of the single Figure will produce a complete screen dot.

The utilization of this generic frequency scaling technique provides the capability to produce dots of which the centers are not on the grid of the original matrix. These are dots of screens with frequencies that otherwise would not be available.

**Third step: rotation by 45 degrees and scaling by 1/sqrt(2.0)**

$$x = (x - y)/2.0$$

$$y = (x + y)/2.0$$

The purpose of this operation is to rotate the shape of the 50% square dot so that it becomes aligned with the x and y directions. The rotation is used to obtain the desired dot shapes in combination with the next coordinate transformation in which the dotted rhombus of Section C is transformed into the 50% square box of Section D.

**Fourth step: the conversion from a Cartesian to a non linear polar coordinate system**

$$radius = (1.0 - cos(pi*x)*cos(pi*y))/2.0$$

$$if(x > 0.0)angle = artan(y/x)$$

$$if(x < 0.0)angle = artan(y/x) + pi$$

This step controls the dot shapes as they grow from 0% to 100%. The angle alfa is the same as in a normal polar coordinate system. However, the radius measures the distance in a very particular way that is also shown in Section D. The dotted "isolines" in Section D are approximately circular close to the origin, while they become gradually square as the x and y coordinates approach +/-0.5. This evolution from round to square controls the shape of the dots as they grow from 0% to 50%. Thus, the dots grow through a shape sequence of round at the beginning, through rounded square to square at the 50% level, and then back to rounded square to finally round again at 100%.

If no elliptical dots are required, the screen function "s" value is made equal to the value of "radius". However, if elliptical dot shapes are desired, further transformations are employed.

**Fifth step: the conversion back to cartesian coordinates**

$$x = radius*cos(alfa)$$

$$y = radius*sin(alfa)$$

The polar coordinate system is again transformed into a Cartesian coordinate system.

**Sixth step: rotation by -45 degrees and compression/expansion of the x dimension**

$$x = ellips*(x + y)/sqrt(2.0)$$

$$y = (y-x)/sqrt(2.0)$$

The ellipticity is obtained by measuring distance anamorphically in and perpendicular to the screening angle. Therefore, the coordinate system is rotated 45 degrees back to its original angle. It should be understood that the sequence of Steps 5 and 6 can be reversed so that the rotation on the value of "alfa" would occur after "step four".

**Seventh step**

$$s = sqrt(x*x + y*y)$$

The euclidian distance "d" in the X-Y coordinate system is calculated and returned as the screen function value "s".

Having described a preferred embodiment of the invention, it will now be apparent to those skilled in the art that numerous modifications can be made therein without departing from the scope of the invention as defined in the following claims.

## Claims

1. A method for controlling half-tone dot shape during dot growth in an electronic half-tone screening process, said method comprising the steps of:

   A. determining the X and Y coordinate values, x and y, for a screen cell;
   B. rotating a 50% square dot shape in the screen cell into alignment with the X and Y axes of the screen cells;
   C. converting the X and Y coordinate values into a non-linear polar coordinate system where:

   radius = (1.0 - cos(pi*x)*cos(pi*y))/2.0

   D. utilizing as screen function, the value "s" where s = radius.

2. A method for controlling half-tone dot shape during dot growth in an electronic half-tone screening process, said method comprising the steps of:

   A. determining the X and Y coordinate values, x and y, for a screen cell;
   B. rotating a 50% square dot shape in the screen cell into alignment with the X and Y axes of the screen cells;
   C. converting the X and Y coordinate values into a non-linear polar coordinate system where:

   radius = (1.0 - cos(pi*x)*cos(pi*y))/2.0

   if (x > 0.0) angle = artan(y/x)

   if (x < 0.0) angle = artan(y/x) + pi;

   D. converting the non-linear polar coordinates back to Cartesian system coordinates;
   E. rotating in a reverse direction and by the same angular amount as step B the resulting dot shape; and,
   F. utilizing as a screen function, the value "s" where

   s = sqrt(x*x + y*y).

3. Method according to claim 2, wherein step D is carried out before step E.

4. Method according to claim 2, wherein step E is carried out before step D.

## Patentansprüche

1. Verfahren zur Steuerung einer Rasterpunktform während des Punktwachstums in einem elektronischen Rasterverfahren, wobei das besagte Verfahren folgende Schritte umfaßt:

   A. Bestimmen der X- und Y-Koordinatenwerte x und y für eine Rasterzelle;
   B. Rotieren einer 50%-Quadratpunktform in der Rasterzelle in Ausrichtung mit den X-und Y-Achsen der Rasterzellen;
   C. Umwandeln der X- und Y-Koordinatenwerte in ein nichtlineares Polarkoordinatensystem, wobei:

   radius = (1,0 - cos(pi*x)*cos(pi*y))/2,0

   D. Verwenden des Wertes "s" als Rasterfunktion, wobei s = Radius.

2. Verfahren zur Steuerung einer Rasterpunktform während des Punktwachstums in einem elektronischen Rasterverfahren, wobei das besagte Verfahren folgende Schritte umfaßt:

   A. Bestimmen der X- und Y-Koordinatenwerte x und y für eine Rasterzelle;
   B. Rotieren einer 50%-Quadratpunktform in der Rasterzelle in Ausrichtung mit den X-und Y-Achsen der Rasterzellen;
   C. Umwandeln der X- und Y-Koordinatenwerte in ein nichtlineares Polarkoordinatensystem, wobei:

   radius = (1,0 - cos(pi*x)*cos(pi*y))/2,0

   if (x > 0,0)angle = artan(y/x)

   if (x < 0,0)angle = artan(y/x) + pi;

   D. Zurückwandeln der nichtlinearen Polarkoordinaten in kartesische Systemkoordinaten;
   E. Rotieren in rückwärtiger Richtung und um dieselbe Winkelgröße wie Schritt B der sich ergebenden Punktform; und
   F. Verwenden des Wertes "s" als Rasterfunktion, wobei

   s = sqrt(x*x + y*y).

3. Verfahren nach Anspruch 2, wobei Schritt D vor Schritt E ausgeführt wird.

4. Verfahren nach Anspruch 2, wobei Schritt E vor Schritt D ausgeführt wird.

**Revendications**

1. Un procédé pour la commande de la forme des points de trame pendant la croissance des points dans un processus électronique de tramage, ledit procédé étant composé des étapes suivantes :

   A. détermination des valeurs x et y des coordonnées X et Y pour une cellule d'écran ;
   B. rotation d'une forme de point à 50 % carrée dans la cellule d'écran dans l'alignement des axes X et Y des cellules de l'écran ;
   C. conversion des valeurs des coordonnées X et Y en un système de coordonnées polaires non linéaires où :

   $$rayon = (1,0 - cos (pi*x)*cos(pi*y))/2,0$$

   D. utilisation de la valeur "s" comme fonction de criblage, où s = rayon.

2. Un procédé pour la commande de la forme des points de trame pendant la croissance des points dans un processus électronique de tramage, ledit procédé étant composé des étapes suivantes :

   A. détermination des valeurs x et y des coordonnées X et Y pour une cellule d'écran ;
   B. rotation d'une forme de point à 50 % carrée dans la cellule d'écran dans l'alignement des axes X et Y des cellules de l'écran ;
   C. conversion des valeurs des coordonnées X et Y en un système de coordonnées polaires non linéaires où :

   $$rayon = (1,0 - cos (pi*x)*cos(pi*y))/2,0$$

   $$si (x > 0.0), angle = artan(y/x)$$

   $$si (x < 0.0), angle = artan(y/x) + pi$$

   D. reconversion des coordonnées polaires non linéaires en coordonnées d'un système cartésien ;
   E. rotation dans une direction inverse et selon le même angle que celui de l'étape B de la forme de point résultante ; et
   F. utilisation de la valeur "s" comme fonction de criblage, où

   $$s = racine\ carrée(x*x + y*y).$$

3. Procédé conforme à la revendication 2, où l'étape D est réalisée avant l'étape E.

4. Procédé conforme à la revendication 2, où l'étape E est réalisée avant l'étape D.

$a$

$$x = x + 1.0/17.0$$
$$y = y + 1.0/19.0$$

$b$

$$x = mod(3.0*x+1, 2.0) - 1.0$$
$$y = mod(3.0*y+1, 2.0) - 1.0$$

$c$

$$x' = (x - y)/2.0$$
$$y' = (x + y)/2.0$$

$d$

alfa

radius = cst

radius = (1.0 - cos(PI*x)*cos(PI*y))/2.0
if(x=0.0) alfa = 0.0
if(x>0.0) alfa = artan(y/x)
if(x<0.0) alfa = artan(y/x) + PI

x = radius*cos(alfa)
y = radius*sin(alfa)

x = ellips*(x + y)/sqrt(2.0)
y = (y - x)/sqrt(2.0)

d = sqrt(x*x + y*y)

8